(19) Europäisches Patentamt / European Patent Office / Office européen des brevets

(11) **EP 2 777 233 B1**

(12) **EUROPEAN PATENT SPECIFICATION**

(45) Date of publication and mention
of the grant of the patent:
**30.05.2018 Bulletin 2018/22**

(21) Application number: **12787142.4**

(22) Date of filing: **23.10.2012**

(51) Int Cl.:
**H04L 27/26** $^{(2006.01)}$      **H04J 13/00** $^{(2011.01)}$

(86) International application number:
**PCT/SE2012/051139**

(87) International publication number:
**WO 2013/070144 (16.05.2013 Gazette 2013/20)**

(54) **A METHOD AND APPARATUS FOR SIGNALING DEMODULATION REFERENCE SIGNALS**

VERFAHREN UND VORRICHTUNG ZUR SIGNALISIERUNG VON DEMODULATIONSREFERENZSIGNALEN

PROCÉDÉ ET APPAREIL DE SIGNALISATION DE SIGNAUX DE RÉFÉRENCE DE DÉMODULATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.11.2011 US 201161556550 P**

(43) Date of publication of application:
**17.09.2014 Bulletin 2014/38**

(73) Proprietor: **Telefonaktiebolaget LM Ericsson (publ)**
**164 83 Stockholm (SE)**

(72) Inventor: **SORRENTINO, Stefano**
**SE-171 68 Solna (SE)**

(74) Representative: **Ericsson**
**Patent Development**
**Torshamnsgatan 21-23**
**164 80 Stockholm (SE)**

(56) References cited:
**CN-A- 102 158 252**

- **ZTE: "Uplink Reference Signal Enhancement for CoMP", 3GPP DRAFT; R1-113017 UPLINK REFERENCE SIGNAL ENHANCEMENT FOR COMP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 4 October 2011 (2011-10-04), XP050538200, [retrieved on 2011-10-04]**
- **QUALCOMM INCORPORATED: "Sequence Group Hopping for MU-MIMO Operation", 3GPP DRAFT; R1-106374 SGH FOR MU-MIMO OPERATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jacksonville, USA; 20101115, 9 November 2010 (2010-11-09), XP050489743, [retrieved on 2010-11-09]**
- **SAMSUNG: "UL DMRS Enhancements for UL CoMP", 3GPP DRAFT; R1-113094 UL DMRS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 4 October 2011 (2011-10-04), XP050538238, [retrieved on 2011-10-04]**

**Description**

RELATED APPLICATIONS

This application claims priority from the U.S. provisional patent application filed on 7 November 201 land assigned App. No, 61/556,550, and which is incorporated by reference herein.

TECHNICAL FIELD

The present invention generally relates to wireless communication networks and particularly relates to the use of demodulation reference signals in such networks.

BACKGROUND

Channel estimation is required for coherent demodulation of a received radio signal, where "coherence" denotes detection of the received signal phase. It is known to transmit so-called demodulation reference signals, "RS", to allow for coherent detection at the receiver. As a non-limiting example, user equipment configured to operate in wireless communication networks based on the Long Term Evolution, "LTE", standard transmit RS on the uplink, "UL", to allow for coherent detection at the receiving eNodeBs of their uplink data transmissions on the Physical Shared Uplink Channel, "PUSCH".

The RS from different UEs within the same cell potentially interfere with each other. Further, assuming synchronized networks, the RS transmitted by UEs in one cell may interfere with the RS transmitted by UEs in a neighboring cell To limit the level of interference between RS, different techniques have been introduced in different releases of the LTE standard. Currently, the LTE standard assumes that RS transmitted by different UEs within the same cell are orthogonal with respect to one another, while the RS transmitted by UEs in one cell are semi-orthogonal with respect to the RS transmitted by UEs in a neighboring cell. (Note, however, that orthogonal RS can be achieved for aggregates of cells through the use of so called "sequence planning").

To understand the above interference mitigations, it is first helpful to understand that in LTE each RS is characterized by a "group index" and a "sequence index," which together define the so called "base sequence." Base sequences are con-specific in Rel-8/9/10, and they are a function of the cell ID, where each cell in the network has a unique ID. Different base sequences are semi-orthogonal. The RS for a given UE is only transmitted on the same bandwidth of PUSCH, and the base sequence is correspondingly generated so that the RS is a function of the PUSCH bandwidth. For each subframe, two RSs are transmitted, one per slot.

Rid-8/9 of the LTE standard achieves RS orthogonality within the same cell through the use of a cyclic shift, "CS", in which UEs using the LTE same base sequence each time-vase apply a different cyclic shift to the base sequence. There are twelve different cyclic shifts defined in Rel-8/9, out of which only eight can be dynamically indicated in each scheduled subframe, This operation is referred to herein as "cyclic shift hopping" or "CS hopping" for short. In a current LTE-based example, the randomization pattern used by UEs for cyclic shift hopping is cell-specific. For each UE in a cell, a different cyclic shift offset is in general applied in each slot, with the offset known at the UE and at the receiving eNodeB, so that it can be compensated at the eNodeB side during channel estimation.

RS orthogonalization also may be achieved through the use of Orthogonal Cover Codes, "OCC", which are individually applied by UEs to their RS transmissions, in addition to or in alternative to the use of cyclic shift hopping. The use of OCC is a multiplexing technique based on orthogonal time domain codes. In the LTE context, a UE transmits its reference signal as two reference symbols sent in the successive two slots comprising an LTE subframe. Here, an appropriate OCC has a code length, also referred to as block length, of two, e.g., [1-1] or [1 1], and the UE applies the OCC to the two reference symbols in the subframe.

While base-sequences are assigned in a semi-static fashion, the cyclic shift and OCC are UE-specific and dynamically assigned as part of the scheduling grant for each UL PUSCH transmission. Cyclic shift randomization is always enabled in LTE and its use generates random, cell-specific cyclic shift offsets per slot. The pseudo-random cyclic shift pattern-i.e., the CS hoppin pattern-is a function of the base sequence index and the cell ID and is thus cell-specific. Sequence hopping and group hopping, "SGH", are base sequence index randomization techniques, which operate on a slot level with a cell-specific pattern, which in turn is a function of the cell ID and sequence index. Notably, for Rel-8/9 UEs, SGH can be enabled/disabled on a cell-specific basis, and for Rel-10 UEs, SGH can be enabled in a UE specific fashion.

Interference mitigation among reference signals becomes decidedly more complicated in the context of the multi-antenna techniques introduced in LTE Rel-10. While such techniques, including linear preceding for the simultaneous transmission of multiple data streams in parallel on different "spatial multiplexing layers," significantly increase data rates, they also lead to more complex RS transmission and interference-mitigation scenarios. In particular, whenever a UE transmits on multiple layers, it must transmit a unique reference signal on each layer, to permit coherent detection at the receiving eNodeB(s).

The mitigation of interference between the RS from multiple UEs becomes particularly complicated in certain scenarios, e.g., in Coordinated Multi-Point, "CoMP", deployments, transmissions are coordinated across UEs in a cluster of cells, meaning that different base sequences are involved in the RS transmissions from the UEs served by the CoMP cluster. Even when performing Multi-User Multiple-Input-Multiple-Output, "MU-MIMO", within the same cell becomes more complicated when simultaneously scheduled UEs have only partly overlapping transmission bandwidth.

However, the almost-certain presence of a mix of UEs from Rel-8/9110 and beyond in the same network emphasizes the need to seamlessly co-schedule such UEs, independently of their specific release. Notably, however, MU-MIMO is not efficient in Rel-8/9/10 in conjunction with SGH, if the UEs paired for multi-user service are assigned different base sequences or different bandwidths, because neither OCC nor cyclic shifts are effective in such scenario and only semi-orthogonality can be achieved between their respective reference signals. One known approach to that issue is based on disabling SGH in a UE-specific way for some of the Reel-10 UEs, However, SGH can only be disabled in a cell-specific way for Rel-8/9 UEs, thus implying cell-specific SGH disabling even for Rel-10 UEs. However, such disabling results in a severe degradation of inter-cell interference control. Furthermore, SGH disabling allows for MU-MIMO within a cell but not between cells associated with different cell-IDs and base sequences for UL DMRS.

One might consider assigning the same base sequence and, consequently, the same SGH pattern, to interfering cells such as by assigning the same base sequence to a macro cell in a heterogeneous network, "bet-net", and to all of the pico cells overlaying that macro cell. However, that approach reduces SGH randomization, leads to unpredictable large interference peaks in reference signals when UEs with the same base sequence are scheduled on partly overlapping bandwidths, and results in reference-signal capacity limitations, because only cyclic shifting and OCC may be employed for orthogonalizing different reference signals over the aggregated cells. The document ZTE: "Uplink Reference Signal Enhancement for CoMP",3GPP DRAFT; RS-113017 discloses that the LTE release-10 DM-RS arrangement works for SU-MIMO and MU-MIMO within one cell. If UEs belong to different cells (for instance in COMP), cyclic shift hopping pattern is different. Under these circumstances cyclic shift hopping between slots means that OCC cannot provide orthogonality between DM-RS from different cells. It is suggested to change to cyclic shift hopping on sub-frame level when in MU-MIMO mode.

SUMMARY

The invention is as disclosed in the independent claims.

BRIEF DESCRIPTION OF THE DRAWING

Fig. 1 is a block diagram of one embodiment of a wireless communication network in which one or more network nodes and wireless devices are configured according to the method(s) taught herein for generating and transmitting demodulation reference symbols.

Fig. 2 is a block diagram of one embodiment of a user equipment, "UE", or other wireless device, such as may be used in the network of Fig. 1,

Fig. 3 is a block diagram of one embodiment of functional processing elements implemented in an example wireless device.

Fig. 4 is a logic flow diagram of one embodiment of a processing method for demodulation reference symbol, "DMRS", transmission from a wireless device.

Fig. 5 is a block diagram of one embodiment of an example base station, such as may be used in the network of Fig. 1.

Fig. 6 is a block diagram of one embodiment of functional processing elements implemented in an example base station.

Fig. 7 is a logic flow diagram of one embodiment of a processing method for controlling DMRS transmissions from a wireless device, such as may be implemented in a base station or other network node.

Figs. 8A and 8B are signal diagrams of slot and subframe structures associated with DMRS transmissions in some embodiments described herein.

DETAILED DESCRIPTION

Note that although terminology from 3GPP LTE-Advanced has been used in this disclosure to exemplify the invention, this should not be seen as limiting the scope of the invention to only the aforementioned system. Other wireless systems, including WCDMA, WiMax, UMB and GSM, may also benefit from exploiting the ideas covered within this disclosure.

Also note that terminology such as base station and UE should be considered non-limiting and does in particular not imply a certain hierarchical relation between the two; in general "base station" could be considered as device 1 and "UE" device 2, and these two devices communicate with each other over some radio channel. Further, unless otherwise noted, the term "UE" has general applicability and may be understood as being interchangeable with the term "wireless device."

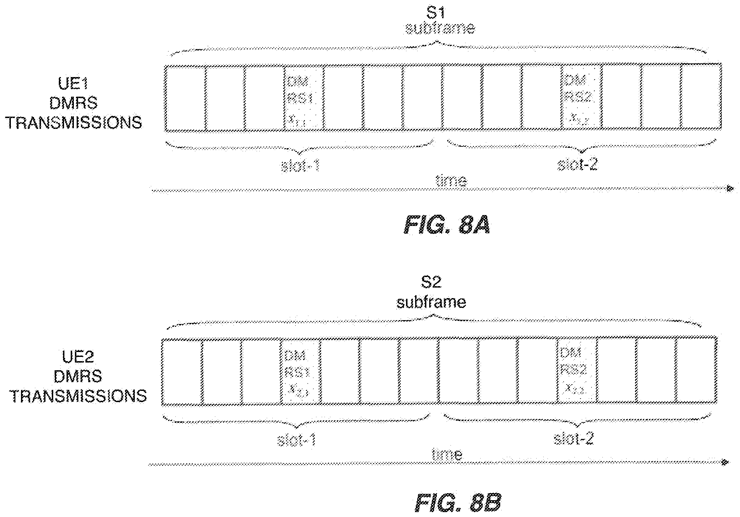

In an example context involving Long Term Evolution or LTE, a method disclosed herein involves transmitting demodulation reference symbols on an LTE slot/subframe basis, where a basic demodulation reference symbol transmission involves the transmission of two demodulation reference symbols, one such symbol in each of the two slots comprising the subframe in question. One may refer ahead momentarily to Figs. 8A and 8B, which graphically depict demodulation reference symbols-also denoted as "DMRS"-being transmitted within the indicated slots of an LTE subframe. In particular, Fig. 8A illustrates demodulation reference symbols $x_{1,1}$ and $x_{1,2}$, as transmitted in first and second slots of a given subframe by a first wireless device, while Fig. 8B illustrates demodulation reference symbols $x_{2,1}$ and $x_{2,2}$, as transmitted in the same first and second slots by a second wireless device.

According to one embodiment of the method, a wireless device, such as UE, generates a demodulation reference symbol and transmits the demodulation reference symbol in a first slot of a subframe. The UE then transmits the same demodulation reference symbol in a second slot of the subframe. Stated differently, the demodulation reference symbol that was transmitted in the first slot is repeated in the second slot. Notably, the same cyclic shift value is applied for each transmission of the demodulation reference symbol. As such, it will be understood that, for the time frame at issue with respect to me repeated DMRS transmission, CS hopping is "disabled" inasmuch as the same cyclic shift value-the same cyclic shift offset-is applied for both transmissions of the repeated demodulation reference symbol.

In more detail, me example wireless device transmits a demodulation reference symbol in a first slot of a subframe using a base sequence and a cyclic shift offset. The wireless device then transmits a demodulation reference symbol in a second slot of the subframe using the same base sequence and the same cyclic shift offset. The implementation complexity of the proposed scheme is marginal, and it allows substantial reuse of the SGH sequences implemented in Rel.8/9/10UEs.

Returning to Fig. 8A again, consider a subframe S1, transmitted by a wireless device that is configured for LTE operation and denominated as "UE1". This device is provided with two demodulation reference symbols, respectively one per slot. Without loss of generality, in the following a time-domain representation of the signals is provided, but equivalent principles may be applied for frequency-domain processing.

Let s1 be the DMRS base sequence for slot-1 and s2 the DMRS base sequence for slot-2. In case of multi-antenna transmission, Fig. 8A represents the DMRS associated to a given transmission layer. Consider now a second LTE subframe, S2, as in Fig. 8B, where the DMRS base sequences for the two slots are respectively s3 and s4. S2 is transmitted by another wireless device, denominated as "UE2". When SGH is enabled for the two UEs by the involved network, subframes S1 and S2 have different base sequences in each slot, where s1, s2, s3 and s4 are semi-orthogonal base sequences pseudo-randomly chosen from a set of predefined base sequences.

On top of optional SGH, each UE is prodded with CS-hopping, which may not be disabled according to LTE Rel-8/9/10, Consider, e.g., the case where the two UEs are co-scheduled on partly overlapping bandwidth. As an example from prior art, consider the case where UE1 and UE2 belong to different cells and are not assigned the same base sequence, e.g., one non-limiting example is that UE1 belongs to a macro cell and UE2 to a pico cell in a het-net LTE scenario. Assume, without limiting the generality of these teachings, that the following cyclic shift and OCC values are assigned:

- UE1: CS1,1 on slot-1, CS1,2 on slot-2, OCC1=[11], and
- UE2: CS2,1 on slot-1, CS2,2 on slot-2, OCC2=[1 -1].

The term $\alpha_{CS_{a,b}}$ denotes the phase shift corresponding to the CS for user "a" on slot "b", and the $\alpha_{CS_{1,1}}$ - $\alpha_{CS_{2,1}}$ $\alpha CS_{1,2}$ - $\alpha_{CS_{2,2}}$, as typically configured in an LTE network to achieve CS randomization for different cells.

The signal for the DMRS on slot-1 for UE1 is

$$x_{1,1}(n) = s_1(n) \otimes \delta\left(n - T_{1,1}\right).$$

The signal for the DMRS on slot-2 for UE1 is

$$x_{1,2}(n) = s_2(n) \otimes \delta(n - T_{1,2}).$$

The signal for the DMRS on slot-1 for UE2 is

$$x_{2,1}(n) = s_3(n) \otimes \delta(n - T_{2,1}).$$

The signal for the DMRS on slot-2 for UE2 is

$$x_{2,2}(n) = s_4(n) \otimes \delta(n - T_{2,2}).$$

where $\otimes$ indicates circular convolution over the support of $s_x(n)$ and $\delta(n)$ is a Dirac's delta centered on sample 0. $T_{a,b}$ represents the delay (in samples) due to the cyclic shift in frequency domain $CS_{a,b}$. Due to the properties of CAZAC sequences employed for base sequences, it holds that $s_i \otimes s_i^* = \delta(n)$.

Now, let $h_1$ be the channel impulse response from UE1 and let $h_2$ be the channel impulse response from UE2 to the network access point. Further, assume that the channels are constant over the two slots. Disregarding for simplicity the noise terms, the received signal y1 on slot-1 reads as $y_1(n) = h_1(n) \otimes x_{1,1}(n) + h_2(n) \otimes x_{2,1}(n)$, while the signal at slot-2 reads as

$$y_2(n) = h_1(n) \otimes x_{1,2}(n) + h_2(n) \otimes x_{2,2}(n).$$

As an example, consider the channel estimator for UE1, based on a matched filter. The output of the matched filter is:

$$g_1(n) = \frac{x_{1,1}(-n)^* \otimes y_1(n) + x_{1,2}(-n)^* \otimes y_2(n)}{2}$$

$$= h_1(n) + h_2(n) \otimes \frac{x_{1,1}(-n)^* \otimes x_{2,1}(n) + x_{1,2}(-n)^* \otimes x_{2,2}(n)}{2},$$

where $h_2(n) \otimes \dfrac{x_{1,1}(-n)^* \otimes x_{2,1}(n) + x_{1,2}(-n)^* \otimes x_{2,2}(n)}{2}$ represents inter-UE interference and is in general non-zero. Consequently, the legacy, prior art LTE solution is not able to cancel DMRS interference in the analyzed scenario in the general case because of the term $x_{1,1}(n)^* \otimes x_{2,1}(n) + x_{1,2}(-n)^* \otimes x_{2,2}(n)$.

One possible circumvention of this problem is to repeat the same base sequence on both slots of the subframe as discussed in 3GPP contribution R1-110298, "On UL DM-RS SGH Disabling". With such a solution it becomes possible to support orthogonal DMRS for co-scheduled UEs within the same cell, i.e., for UEs provided with the same CS hopping pattern. However, it is still not possible to guarantee inter-cell DMRS orthogonality. The mathematical proof of that is found in the following:

$$x_{1,1}(-n)^* \otimes x_{2,1}(n) + x_{1,2}(-n)^* \otimes x_{2,2}(n)$$
$$= \left(s_1(-n)\delta(n + T_{1,1})\right)^* \otimes \left(s_2(n)\delta(n - T_{2,1})\right) + \left(s_1(-n)\delta(n + T_{1,2})\right)^* \otimes \left(s_2(n)\delta(n - T_{2,2})\right)$$
$$= s_1(-n)^* s_2(n)\left(\delta(n + T_{1,1}) \otimes \delta(n - T_{2,1}) + \delta(n + T_{1,2}) \otimes \delta(n - T_{2,2})\right),$$

which shows that the interference term is not canceled in the general case.

In addressing these and other issues, some embodiments taught herein comprise modifying the mapping of demodulation reference symbols to slots in order to allow DMRS orthogonality for Multi-User Multiple-Input-Multiple-Output, "MU-MIMO", applications. Similarly, orthogonality for MU-MIMO also may be obtained between wireless devices belonging to different cells.

Some embodiments comprise repeating the same DMRS symbol on both slots of a given subframe. In case OCC is applied, it is applied on top of such repeated symbol. For example, In case the OCC pattern [1 -1] is applied, it holds $x_{1,2} = -x_{1,1}$. The demodulation reference symbols transmitted may differ between different subfbmes if base sequence and/or group hopping pattern is applied. Interference is canceled, as shown in further following details, wherein:

$$x_{1,1}(-n)^*\otimes x_{2,1}(n) + x_{1,2}(-n)^*\otimes x_{2,2}(n) = x_{1,1}(-n)^*\otimes x_{2,1}(n) - x_{1,1}(-n)^*\otimes x_{2,1}(n) = 0.$$

In one example, the demodulation reference symbol transmitted by the UE and repeated on both slots, excluding the effect of OCC, is derived from the demodulation reference symbol that would have been transmitted by the UE for one of the slots according to the LTE Rel-8/9/10 standard. By doing so, the solution may be implemented by reusing most of the implementation for previous LTE releases.

Assuming that two In a MU-MIMO configuration repeat the same demodulation reference symbol on both slots and that one of them employs OCC=[1 1] and the other one OCC=[1 -1], the demodulation reference symbols from the two UEs are orthogonal with respect to each other after matched filtering for channel estimation.

In this example of OCC, the length of the OCC is two, i.e., the OCC used to cover the DMRS transmissions includes two elements and, in particular, a respective element in the OCC is applied to a respective one of the two demodulation reference symbols transmitted in a subframe. In this regard, it will be understood that the OCC is repeatedly applied to successive DMRS transmissions. In this non-limiting example, with two demodulation reference symbols transmitted as a pair in the two slots of a subframe, each OCC repetition covers such a pair of demodulation reference symbols.

In another example, the same pseudo-random CS-hopping offset and the same pseudo-random base sequence are optionally repeated on both slots within a subframe, and pseudo-randomly changed between subframes.

In another example, when a modified pseudo-random base sequence hopping pattern is used, such that the same base sequence is repeated on both slots within a subframe, the CS hopping is implicitly disabled. Here, disabling CS hopping means that the same cyclic shift value is employed in both slots of a subframe. Notably, however, the cyclic shift value may be varied across subframes, e.g., pseudo-randomly updated across different subframes while being held fixed for the DMRS transmissions within individual ones of the subframes.

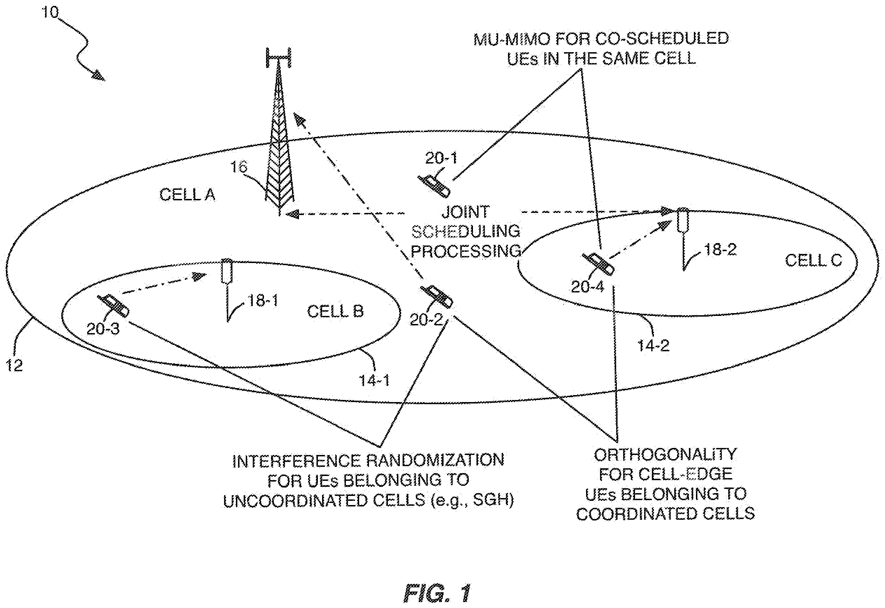

Although the described solutions may be implemented in any appropriate type of telecommunication system supporting any suitable communication standards and using any suitable components, particular embodiments of the described solutions may be implemented in an UE network, such as that illustrated in Fig. 1.

The example network 10 represents an LTE-based het-net deployment, where a macro cell 12, "Cell A", that is overlaid with two pico cells 14-1 and 14-2, which are also labeled as "Cell B" and "Cell C", respectively. Note that the term "pico cell 14" and "pico cells 14" will be used generically, unless there is a need to use suffixes "-1", "-2", and so on, for distinction.

The diagram depicts a macro base station 16 providing coverage in the macro cell 12, and it will be understood that the macro base station 16 comprises, e.g., an eNodeB in the LTE context. Similarly, one sees pico base stations 18-1 and 18-2 providing coverage in the pico cells 14-1 and 14-2, respectively. These pico base stations 18 may be understood as representing lower-power access points, such as Home eNodeBs, or other smaller-coverage types of access points.

The depicted arrangement provides communication services to a number of wireless devices 20 operating within the various cellular coverage areas. Merely by way of example, the following UEs or other wireless devices are depicted: 20-1, 20-2, 20-3, and 20-4. One sees that wireless devices 20-1 and 20-2 may be operating as co-scheduled users in a MU-MIMO context, that wireless devices 20-2 and 20-4 may be operating as cell-edge UEs belonging to coordinated cells 12 and 14-2, for orthogonalization of their DMRS transmissions, among other aspects of such coordination, while the wireless devices 20-2 and 20-3 may be operating with respect to each other as UEs belonging to uncoordinated cells, where interference randomization is used to mitigate interference between their respective DMRS transmissions.

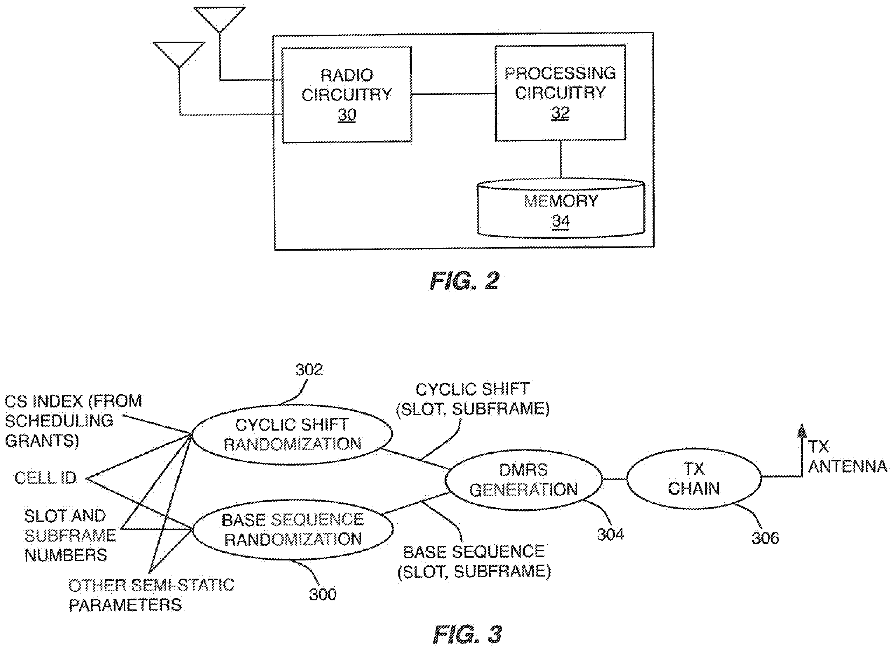

The example network 10 may further include any additional elements suitable to support communication between the wireless devices 20 or between a wireless device 20 and another communication device, such as a landline telephone, which is not shown. Although the illustrated wireless devices 20 may represent communication devices that include any suitable combination of hardware and/or software, a non-limiting embodiment of a wireless device 20 is depicted in Fig. 2.

As shown in Fig. 2, the example wireless device 20 includes radio circuitry 30 with one or more associated antennas, processing circuitry 32, and memory 34, which may comprise both program and working data storage. The radio circuitry 30 may comprise RF circuitry and include or be associated with baseband processing circuitry, which may be implemented in the processing circuitry 32.

In some embodiments, some or all of the functionality described herein for device-side DMRS generation and transmission is provided by the processing circuitry 32 executing instructions stored on a computer-readable medium, such as the memory 34. Alternative embodiments of the wireless device 20 may include additional components beyond those shown in the diagram, and such additional elements may be responsible for providing certain aspects of the wireless device's functionality, including any of the functionality described above and/or any functionality necessary to support the solution(s) described above.

As shown in Fig. 3, the processing circuitry 32 in one or more embodiments is configured to generate demodulation reference signals using base sequence randomization and CS randomization-which are depicted as being performed in functional processing elements 300 and 302, respectively. A DMRS generation function 304 generates demodulation reference symbols according to the randomizations, and the resulting demodulation reference symbols are transmitted via a "Tx chain" 306 and associated antenna(s), where it will be understood that the Tax chain 306 is implemented by radio circuitry 30.

With the above implementation examples in mind, a wireless device 20 in one or more embodiments taught herein is configured to perform a method of transmitting demodulation reference symbols that includes the device selectively disabling cyclic shift hopping within repetitions of an orthogonal cover code that is applied to demodulation reference symbol transmissions by the device. That is, as an optional operational configuration, the wireless device 20 uses the same CS value for all demodulation reference symbols transmitted within one repetition of the orthogonal cover code being used to cover its DMRS transmissions. For the LTE example case where a UE transmits two demodulation reference symbols in a subframe and the orthogonal cover code has a complementary length of two-i.e., one element per demodulation reference symbol transmitted within the subframe-it will be understood that each repetition of the orthogonal cover code "covers" the transmission of two demodulation reference symbols.

Thus, when cyclic shift hopping within repetitions of the orthogonal cover code is disabled, the method includes the wireless device 20 applying a same cyclic shift value to individual demodulation reference symbols transmitted within each repetition of the orthogonal cover code, so that all demodulation reference symbols transmitted for one repetition of the orthogonal cover code have the same cyclic shift value applied to them. Conversely, when cyclic shift hopping within repetitions of the orthogonal cover code is enabled, the method includes the wireless device 20 applying a different cyclic shift value to individual demodulation reference symbols transmitted within each repetition of the orthogonal cover code, so that all demodulation reference symbols transmitted for one repetition of the orthogonal cover code have different cyclic shift values applied to them.

Notably, even when cyclic shift hopping within each repetition of the orthogonal cover code is disabled, the method may still include changing the cyclic shift value applied over successive repetitions of the orthogonal cover code. In the LTE example case, such operation means that the cyclic shift value applied to the demodulation reference symbols transmitted in one subframe will differ from the cyclic shift value applied to the demodulation reference symbols transmitted in another subframe For example, the wireless device 20 may change the cyclic shift value applied over successive repetitions of the orthogonal cover code by pseudo-randomly changing the cyclic shift value over successive repetitions of the orthogonal cover code, e.g., the cyclic shift used for DMRS transmissions over successive sublrames pseudo-randomly changes.

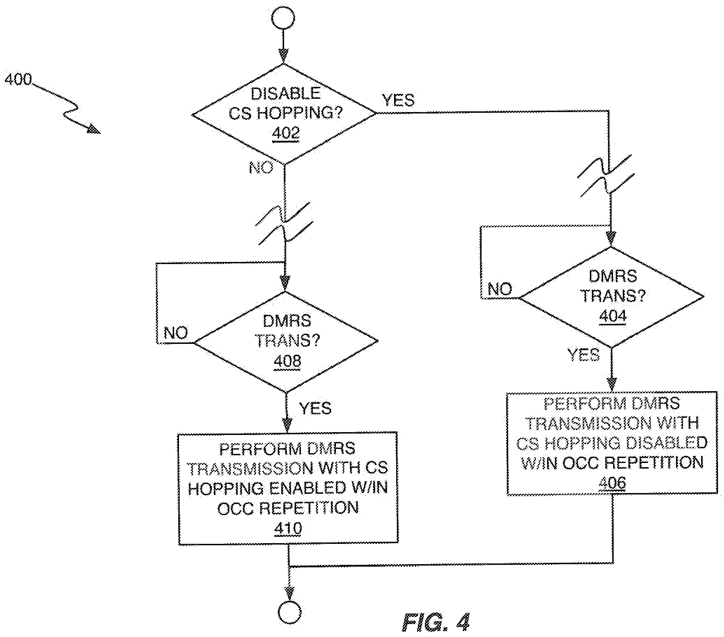

Regardless, an advantageous aspect of the above method is that respective elements of the orthogonal cover code are applied to respective ones of the individual demodulation reference symbols transmitted in each repetition of the orthogonal cover code, while the same cyclic shift value is used for all demodulation symbols transmitted within each given repetition of the orthogonal cover code. An example of the method is depicted as method 400 in Fig. 4.

One sees the wireless device 20 optionally disabling cyclic shift hopping within repetitions of the orthogonal cover code it is using to cover its DMRS transmissions (Block 402), where a "YES" from Block 402 means that cyclic shift hopping is disabled within individual repetitions of the orthogonal cover code, which means that the LTE same cyclic shift value will be applied to each demodulation reference symbol transmitted within a given repetition of the orthogonal cover code. Thus, when it is time to perform a next DMRS transmission ("YES" from Block 404), the wireless device 20 performs that transmission using a fixed cyclic shift value for all of the demodulation reference symbols transmitted within a current repetition of the orthogonal cover code (Block 406).

Conversely, a "NO" from Block 402 means that cyclic shift hopping is enabled within individual repetitions of the orthogonal cover code, which means that the cyclic shift value will be changed for each demodulation reference symbol transmitted within a given repetition of the orthogonal cover code. Thus, when it is time to perform a next DMRS transmission ("YES" from Block 408), the wireless device 20 performs that transmission using a changing cyclic shift value for each of the demodulation reference symbols transmitted within a current repetition of the orthogonal cover code (Block 410).

In some embodiments, the method 400 includes, in each repetition of the orthogonal cover code, transmitting a same demodulation reference symbol multiple times but with a different element of the orthogonal cover code applied each time. Of course, such embodiments may further include changing the demodulation reference symbol over successive repetitions of the orthogonal cover code, so that different demodulation reference symbols are repeated in different repetitions of the orthogonal cover code.

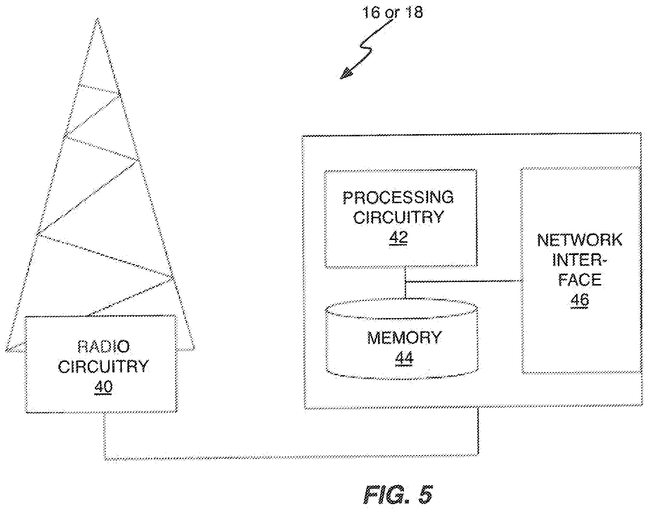

Turning to the network-side of such operations, Fig. 5 illustrates an example network node, e.g., a base station 16 or 18 as introduced in Fig. 1. The illustrated network node 16 or 18 includes any suitable combination of hardware and/or software.

In the illustrated example, the network node 16 or 18 includes radio circuitry 40 and one or more associated antennas, processing circuitry 42, program and working data memory 44, and one or more network interfaces 46, for communication with other network nodes 16 or 18 and/or with other types of network nodes. The processing circuitry 42 may comprise RF circuitry and baseband processing circuitry (not explicitly noted in the illustration).

In particular embodiments, some or all of the functionality described herein for a network base station, relay or other such node, may be provided by the processing circuitry 42 executing instructions stored on a computer-readable medium, such as the memory 44. Alternative embodiments of the network node 16 or 18 may include additional components responsible for providing additional functionality, including any of the functionality identified herein and/or any functionality necessary to support the network-side solutions described herein.

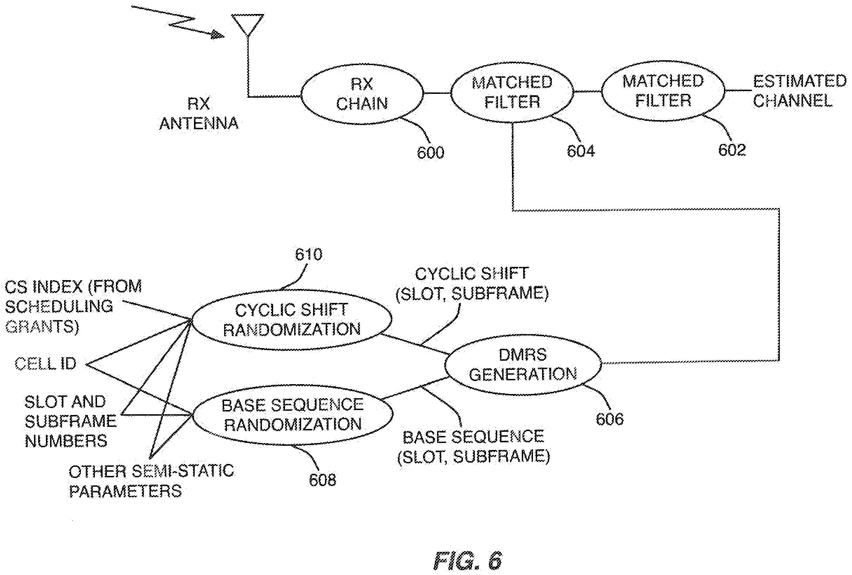

As shown in Fig. 6, the network node 16 or 18 is configured to estimate the channel of wireless device 20, based on receiving demodulation reference symbols from the wireless device 20 via Rx antenna(s) and an Rx "chain" 600, corresponding to the processing circuitry 42 operating in conjunction with the radio circuitry 40. The processing circuitry 42 is configured to perform channel estimation 602 based on matched filtering 604. To this end, the network node 16 or 18 is configured to perform DMRS generation 606, based on base sequence and cyclic shift randomization processing 608 and 610, respectively.

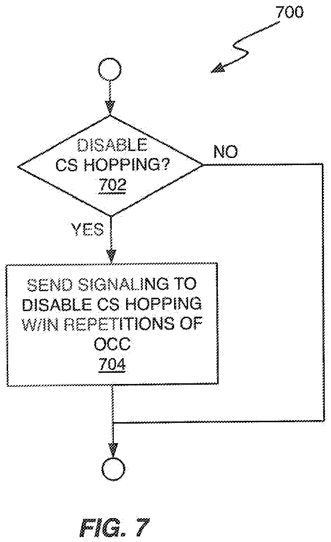

In a general example, the network node 16 or 18 is configured to implement a method 700, as illustrated in Fig. 7. For simplicity of illustration and discussion, the method 700 is presented in terms of a single wireless device 20, but it should be understood as being applicable to essentially any number of wireless devices 20-e.g., the same method 700 can be applied jointly or separately to multiple wireless devices 20 at the same time, or at different times.

The method 700 includes determining whether a wireless device 20 should disable cyclic shift hopping within repetitions of the orthogonal cover code applied by the wireless device 20 to its DMRS transmissions (Block 702). If so ("YES" from Block 702), then the method 700 continues with the network node 16 or 18 sending signaling to the wireless device 20, to cause the wireless device 20 to disable cyclic shift hopping within repetitions of the orthogonal cover code (Block 704). Of course, the wireless device 20 may still be configured to dynamically change the cyclic shift applied by it over successive repetitions of the orthogonal cover code, so that different DMRS transmissions in different repetitions of the orthogonal cover code have different cyclic shift values applied to them.

As an example, the step of determining that the wireless device 20 should disable cyclic shift hopping within individual repetitions of the orthogonal cover code comprises identifying that the wireless device 20 is or will be co-scheduled on overlapping uplink resources with one or more other wireless devices 20 connected to the wireless communication network 10.

In a particular example, the above step of determining comprises determining that the wireless device 20 is a first MU-MIMO user in the wireless communication network 10 that is or will be co-scheduled on overlapping uplink resources with a second MU-MIMO user in the wireless communication network 10. In an example case, the first MU-MMO user is in a first cell 12,14 of the wireless communication network 10 and the LTE second MU-MIMO user is in a neighboring, second cell 12, 14 of the wireless communication network 10, and the step of determining is based on evaluating uplink scheduling information for the first and second cells 12, 14.

In at least one embodiment of the method 700, the wireless communication network 10 comprises an LTE network, and the method includes processing DMRS transmissions received from the wireless device 20 in dependence on whether the wireless device 20 has or has not disabled cyclic shift hopping within repetitions of the orthogonal cover code applied by the wireless device 20 to its DMRS transmissions.

Compared to known solutions and techniques, particular embodiments disclosed herein enable MU-MIMO and inter-cell interference orthogonalization for reference signals while retaining interference randomization on at least a subframe basis. In an example of one such embodiment, a wireless device 20 is configured to apply an orthogonal cover code to both slots of a subframe. For DMRS transmission, the wireless device 20 is configured to: generate a demodulation reference symbol using a base sequence and a cyclic shift and transmit it in a first slot of the subframe; and then transmit a demodulation reference symbol in a second slot of the subframe using the same base sequence and the same cyclic shift-i.e., the same cyclic shift offset is maintained for both demodulation reference symbols transmitted in the subframe

The second demodulation reference symbol may be a repeat of the first one, and the wireless device 20 "covers" the two symbol transmissions using an orthogonal cover code that is applied to the subframe. The wireless device 20 also may be configured to recognize implicitly that cyclic shift hopping should be disabled for the two demodulation reference symbols transmitted within one subframe, based on the indicated use of a randomized base sequence hopping pattern, where the base sequence is randomized on a subframe basis but the same base sequence is repeated in each slot of given subframe. On the network side, a base station 16 or 18 thus may be configured to implicitly indicate that cyclic shift hopping should be disabled, at least within subframes, based on indicating use of the randomized base sequence hopping pattern.

Modifications and other embodiments of the disclosed invention(s) will come to mind to one skilled in the art having the benefit of the teachings presented in the foregoing descriptions and the associated drawings. Therefore, it is to be understood that the invention(s) is/are not to be limited to the specific embodiments disclosed and that modifications and other embodiments are intended to be included within the scope of this disclosure. Although specific terms may be employed herein, they are used in a generic and descriptive sense only and not for purposes of limitation.

**Claims**

1. A method (400) of transmitting demodulation reference symbols from a wireless device (20), said method comprising:

    selectively disabling (402) cyclic shift hopping within repetitions of an orthogonal cover code that is applied to demodulation reference symbol transmissions by the wireless device (20), such that cyclic shift hopping is disabled based on a modified pseudo-random base sequence hopping pattern being used wherein a same base sequence is repeated on all slots within a subframe over which the orthogonal cover code applies; and when cyclic shift hopping within repetitions of the orthogonal cover code is disabled, applying (406) a same cyclic shift value to individual demodulation reference symbols transmitted within each repetition of the orthogonal cover code, so that all demodulation reference symbols transmitted for one repetition of the orthogonal cover code have the same cyclic shift value applied to them; and whe
    n cyclic shift hopping within repetitions of the orthogonal cover code is enabled, applying (410) a different cyclic shift value to individual demodulation reference symbols transmitted within each repetition of the orthogonal cover code, so that all demodulation reference symbols transmitted for one repetition of the orthogonal cover code have different cyclic shift values applied to them.

2. The method (400) of claim 1, further comprising, when cyclic shift hopping within each repetition of the orthogonal cover code is disabled, changing the cyclic shift value applied over successive repetitions of the orthogonal cover code.

3. The method (400) of claim 2, wherein changing the cyclic shift value applied over successive repetitions of the orthogonal cover code comprises pseudo-randomly changing the cyclic shift value over successive repetitions of the orthogonal cover code.

4. The method (400) of any preceding claim, wherein respective elements of the orthogonal cover code are applied to respective ones of the individual demodulation reference symbols transmitted in each repetition of the orthogonal cover code, and wherein the method includes, in each repetition of the orthogonal cover code, transmitting a same demodulation reference symbol multiple times but with a different element of the orthogonal cover code applied each time.

5. The method (400) of claim 4, further comprising changing the demodulation reference symbol over successive repetitions of the orthogonal cover code, so that different demodulation reference symbols are repeated in different repetitions of the orthogonal cover code.

6. A wireless device (20) configured for operation in a wireless communication network (10) and comprising:

    radio circuitry (30) configured for transmitting demodulation reference symbols to one or more reception points in the wireless communication network (10); and proc
    essing circuitry (32) operatively associated with the radio circuitry (30) and configured to:

        selectively disable cyclic shift hopping within repetitions of an orthogonal cover code that is applied to demodulation reference symbol transmissions by the wireless device (20); and
        determine that cyclic shift hopping is to be disabled based on a modified pseudo-random base sequence hopping pattern being used, wherein a same base sequence is repeated on all slots within a subframe over which the orthogonal cover code applies; and
        when cyclic shift hopping within repetitions of the orthogonal cover code is disabled, apply a same cyclic shift value to individual demodulation reference symbols transmitted within each repetition of the orthogonal cover code, so that all demodulation reference symbols transmitted for one repetition of the orthogonal cover code have the same cyclic shift value applied to them; and

when cyclic shift hopping within repetitions of the orthogonal cover code is enabled, apply a different cyclic shift value to individual demodulation reference symbols transmitted within each repetition of the orthogonal cover code, so that all demodulation reference symbols transmitted for one repetition of the orthogonal cover code have different cyclic shift values applied to them.

7. The wireless device (20) of claim 6, wherein, when cyclic shift hopping within each repetition of the orthogonal cover code is disabled, the processing circuitry (32) is configured to change the cyclic shift value applied over successive repetitions of the orthogonal cover code.

8. The wireless device (20) of any of claims 6-7, wherein respective elements of the orthogonal cover code are applied to respective ones of the individual demodulation reference symbols transmitted in each repetition of the orthogonal cover code, and wherein the processing circuitry (32) is configured to, in each repetition of the orthogonal cover code, transmit a same demodulation reference symbol multiple times but with a different element of the orthogonal cover code applied each time.

9. A method (700) of controlling a wireless device (20) operating in a wireless communication network (10), said method implemented in a network node (16, 18) and comprising:

determining (702) that the wireless device (20) should disable cyclic shift hopping within repetitions of an orthogonal cover code applied by the wireless device (20) to demodulation reference symbol, "DMRS", transmissions by the wireless device (20); and

implicitly signaling (704) to the wireless device (20) that cyclic shift hopping is to be disabled, by indicating a modified pseudo-random base sequence hopping pattern wherein a same base sequence is to be repeated by the wireless device (20) on all slots within a subframe over which the orthogonal cover code applies.

10. The method (700) of claim 9, wherein said step of determining comprises identifying that the wireless device (20) is or will be co-scheduled on overlapping uplink resources with one or more other wireless devices (20) connected to the wireless communication network (10).

11. The method (700) of claim 9 or 10, wherein said step of determining comprises determining that the wireless device (20) is a first Multi-User Multiple-Input-Multiple-Output, "MU-MIMO", user in the wireless communication network (10) that is or will be co-scheduled on overlapping uplink resources with a second MU-MIMO user in the wireless communication network (10).

12. The method (700) of claim 11, wherein the first MU-MIMO user is in a first cell (12, 14) of the wireless communication network (10) and the second MU-MIMO user is in a neighboring, second cell (12, 14) of the wireless communication network (10), and wherein said step of determining is based on evaluating uplink scheduling information for the first and second cells (12, 14).

13. A network node (16, 18) configured for operation in a wireless communication network (10) and comprising:

radio circuitry (40) configured to transmit signals to a wireless device (20) connected to the wireless communication network (10) through the network node (16, 18) and to receive signals from the wireless device (20); processing circuitry (42) operatively associated with the radio circuitry (40) and configured to:

determine that the wireless device (20) should disable cyclic shift hopping within repetitions of an orthogonal cover code applied by the wireless device (20) to demodulation reference symbol, "DMRS", transmissions by the wireless device (20); and

signal implicitly to the wireless device (20) that cyclic shift hopping is to be disabled, by indicating a modified pseudo-random base sequence hopping pattern wherein a same base sequence is to be repeated by the wireless device (20) on all slots within a subframe over which the orthogonal cover code applies.

14. The network node (16, 18) of claim 13, wherein the processing circuitry (42) is configured to determine that the wireless device (20) should disable cyclic shift hopping within repetitions of the orthogonal cover code based on being configured to identify that the wireless device (20) is or will be co-scheduled on overlapping uplink resources with one or more other wireless devices (20) connected to the wireless communication network (10).

**15.** The network node (16, 18) of claim 13 or 14, wherein the processing circuitry (42) is configured to determine that the wireless device (20) should disable cyclic shift hopping within individual repetitions of the orthogonal cover code based on being configured to determine that the wireless device (20) is a first Multi User Multiple-Input-Multiple-Output, "MU-MIMO", user in the wireless communication network (10) that is or will be co-scheduled on overlapping uplink resources with a second MU-MIMO user in the wireless communication network (10).

**Patentansprüche**

**1.** Verfahren (400) zum Übertragen von Demodulationsreferenzsymbolen von einer drahtlosen Vorrichtung (20), worin das Verfahren Folgendes umfasst:

selektives Deaktivieren (402) eines zyklischen Shift-Hoppings innerhalb von Wiederholungen eines orthogonalen Deckungscodes, der auf Demodulationsreferenzsymbol-Übertragungen durch die drahtlose Vorrichtung (20) angewendet wird, sodass das zyklische Shift-Hopping auf Basis der Verwendung eines modifizierten Pseudozufalls-Basissequenz-Sprungmusters deaktiviert wird, worin eine gleiche Basissequenz an allen Slots innerhalb eines Teilrahmens wiederholt wird, über den der orthogonale Deckungscode angewendet wird; und wenn das zyklische Shift-Hopping innerhalb von Wiederholungen des orthogonalen Deckungscodes deaktiviert ist, Anwenden (406) eines gleichen zyklischen Verschiebungswertes auf einzelne Demodulationsreferenzsymbole, die innerhalb jeder Wiederholung des orthogonalen Deckungscodes übertragen werden, sodass auf alle Demodulationsreferenzsymbole, die für eine Wiederholung des orthogonalen Deckungscodes übertragen werden, der gleiche zyklische Verschiebungswert angewendet wird; und wenn das zyklische Shift-Hopping innerhalb von Wiederholungen des orthogonalen Deckungscodes aktiviert ist, Anwenden (410) eines unterschiedlichen zyklischen Verschiebungswertes auf einzelne Demodulationsreferenzsymbole, die innerhalb jeder Wiederholung des orthogonalen Deckungscodes übertragen werden, sodass auf alle Demodulationsreferenzsymbole, die für eine Wiederholung des orthogonalen Deckungscodes übertragen werden, unterschiedliche zyklische Verschiebungswerte angewendet werden.

**2.** Verfahren (400) nach Anspruch 1, ferner umfassend, wenn das zyklische Shift-Hopping innerhalb jeder Wiederholung des orthogonalen Deckungscodes deaktiviert ist, Ändern des zyklischen Verschiebungswerts, der über aufeinanderfolgende Wiederholungen des orthogonalen Deckungscodes angewendet wird.

**3.** Verfahren (400) nach Anspruch 2, worin das Ändern des zyklischen Verschiebungswerts, der über aufeinanderfolgende Wiederholungen des orthogonalen Deckungscodes angewendet wird, das pseudozufällige Ändern des zyklischen Verschiebungswerts über aufeinanderfolgende Wiederholungen des orthogonalen Deckungscodes umfasst.

**4.** Verfahren (400) nach einem der vorhergehenden Ansprüche, worin jeweilige Elemente des orthogonalen Deckungscodes auf jeweilige der einzelnen Demodulationsreferenzsymbole angewendet werden, die bei jeder Wiederholung des orthogonalen Deckungscodes übertragen werden, und worin das Verfahren bei jeder Wiederholung des orthogonalen Deckungscodes das mehrfache Übertragen eines gleichen Demodulationsreferenzsymbols umfasst, worin jedoch jedes Mal ein anderes Element des orthogonalen Deckungscodes angewendet wird.

**5.** Verfahren (400) nach Anspruch 4, ferner umfassend das Ändern des Demodulationsreferenzsymbols über aufeinanderfolgende Wiederholungen des orthogonalen Deckungscodes, sodass verschiedene Demodulationsreferenzsymbole in verschiedenen Wiederholungen des orthogonalen Deckungscodes wiederholt werden.

**6.** Drahtlose Vorrichtung (20), die zum Betrieb in einem drahtlosen Kommunikationsnetzwerk (10) konfiguriert ist und Folgendes umfasst:

eine Funkschaltlogik (30), die zum Senden von Demodulationsreferenzsymbolen an eine oder mehrere Empfangspunkte in dem drahtlosen Kommunikationsnetzwerk (10) konfiguriert ist; und Verarbeitungsschaltlogik (32), die der Funkschaltlogik (30) betriebsmäßig zugeordnet sind und konfiguriert sind zum:

selektiven Deaktivieren des zyklischen Shift-Hoppings innerhalb von Wiederholungen eines orthogonalen Deckungscodes, der auf Demodulationsreferenzsymbol-Übertragungen durch die drahtlose Vorrichtung (20) angewendet wird; und

Bestimmen, dass das zyklische Shift-Hopping deaktiviert werden soll auf Basis der Verwendung eines modifizierten Pseudozufalls-Basissequenz-Sprungmusters, worin eine gleiche Basissequenz an allen Slots innerhalb eines Teilrahmens wiederholt wird, über den der orthogonale Deckungscode angewendet wird; und

wenn das zyklische Shift-Hopping innerhalb von Wiederholungen des orthogonalen Deckungscodes deaktiviert ist, Anwenden eines gleichen zyklischen Verschiebungswertes auf einzelne Demodulationsreferenzsymbole, die innerhalb jeder Wiederholung des orthogonalen Deckungscodes übertragen werden, sodass auf alle Demodulationsreferenzsymbole, die für eine Wiederholung des orthogonalen Deckungscodes übertragen werden, der gleiche zyklische Verschiebungswert angewendet wird; und

wenn das zyklische Shift-Hopping innerhalb von Wiederholungen des orthogonalen Deckungscodes aktiviert ist, Anwenden eines unterschiedlichen zyklischen Verschiebungswertes auf einzelne Demodulationsreferenzsymbole, die innerhalb jeder Wiederholung des orthogonalen Deckungscodes übertragen werden, sodass auf alle Demodulationsreferenzsymbole, die für eine Wiederholung des orthogonalen Deckungscodes übertragen werden, unterschiedlichen zyklische Verschiebungswerte angewendet werden.

7. Drahtlose Vorrichtung (20) nach Anspruch 6, worin, wenn das zyklische Shift-Hopping innerhalb jeder Wiederholung des orthogonalen Deckungscodes deaktiviert ist, die Verarbeitungsschaltlogik (32) konfiguriert ist, den zyklischen Verschiebungswert zu ändern, der über aufeinanderfolgende Wiederholungen des orthogonalen Deckungscodes angewendet wird.

8. Drahtlose Vorrichtung (20) nach einem der Ansprüche 6-7, worin jeweilige Elemente des orthogonalen Deckungscodes auf jeweilige der einzelnen Demodulationsreferenzsymbole angewendet werden, die bei jeder Wiederholung des orthogonalen Deckungscodes übertragen werden, und worin die Verarbeitungsschaltlogik (32) konfiguriert ist, bei jeder Wiederholung des orthogonalen Deckungscodes, ein gleiches Demodulationsreferenzsymbol mehrmals zu übertragen, worin jedoch jedes Mal ein anderes Element des orthogonalen Deckungscodes angewendet wird.

9. Verfahren (700) zum Steuern einer drahtlosen Vorrichtung (20), die in einem drahtlosen Kommunikationsnetzwerk (10) arbeitet, worin das Verfahren in einem Netzwerkknoten (16, 18) implementiert ist und Folgendes umfasst:

Bestimmen, dass die drahtlose Vorrichtung (702) zyklisches Shift-Hopping innerhalb von Wiederholungen eines orthogonalen Deckungscodes, der von der drahtlosen Vorrichtung (20) auf Demodulationsreferenzsymbol-"DMRS-" Übertragungen durch die drahtlose Vorrichtung (20) angewendet wird, deaktivieren soll; und implizites Signalisieren (704) an die drahtlose Vorrichtung (20), dass das zyklische Shift-Hopping deaktiviert werden soll, durch Angeben eines modifizierten Pseudozufalls-Basissequenz-Sprungmusters, worin eine gleiche Basissequenz von dem drahtlosen Gerät (20) an allen Slots innerhalb eines Teilrahmens wiederholt wird, über den der orthogonale Deckungscode angewendet wird.

10. Verfahren (700) nach Anspruch 9, worin der Schritt des Bestimmens das Identifizieren umfasst, dass die drahtlose Vorrichtung (20) auf überlappenden Uplink-Ressourcen mit einer oder mehreren anderen drahtlosen Vorrichtung (20), die mit dem drahtlosen Kommunikationsnetzwerk (10) verbunden sind, gemeinsam geplant ist oder werden wird.

11. Verfahren (700) nach Anspruch 9 oder 10, worin der Schritt des Bestimmens das Bestimmen umfasst, dass die drahtlose Vorrichtung (20) ein erster Benutzer von mehreren Benutzern mit mehreren Eingängen und mehreren Ausgängen, "MU-MIMO", in dem drahtlosen Kommunikationsnetzwerk (10) ist, der auf überlappenden Uplink-Ressourcen mit einem zweiten MU-MIMO-Benutzer in dem drahtlosen Kommunikationsnetzwerk (10) gemeinsam geplant ist oder werden wird.

12. Verfahren (700) nach Anspruch 11, worin sich der erste MU-MIMO-Benutzer in einer ersten Zelle (12, 14) des drahtlosen Kommunikationsnetzwerks (10) befindet und sich der zweite MU-MIMO-Benutzer in einer benachbarten zweiten Zelle (12 14) des drahtlosen Kommunikationsnetzwerks (10) befindet und worin der Schritt des Bestimmens auf dem Bewerten von Uplink-Planungsinformationen für die erste und die zweite Zelle (12, 14) basiert.

13. Netzwerkknoten (16, 18), der zum Betrieb in einem drahtlosen Kommunikationsnetzwerk (10) konfiguriert ist und Folgendes umfasst:

Funkschaltlogik (40), die konfiguriert sind, Signale an eine drahtloses Vorrichtung (20) zu übertragen, die über den Netzwerkknoten (16, 18) mit dem drahtlosen Kommunikationsnetzwerk (10) verbunden ist, und Signale von der drahtlosen Vorrichtung (20) zu empfangen;

Verarbeitungsschaltlogik (42), die der Funkschaltlogik (40) betriebsmäßig zugeordnet ist und konfiguriert ist zum:

Bestimmen, dass das drahtlose Gerät (20) zyklisches Shift-Hopping innerhalb von Wiederholungen eines orthogonalen Deckungscodes, der von der drahtlosen Vorrichtung (20) auf das Demodulationsreferenzsymbol- "DMRS-" Übertragungen durch die drahtlose Vorrichtung (20) angewendet wird, deaktivieren soll; und

implizites Signalisieren (704) an die drahtlose Vorrichtung (20), dass das zyklische Shift-Hopping deaktiviert werden soll, durch Angeben eines modifizierten Pseudozufalls-Basissequenz-Sprungmusters, worin eine gleiche Basissequenz von dem drahtlosen Gerät (20) an allen Slots innerhalb eines Teilrahmens wiederholt wird, über den der orthogonale Deckungscode angewendet wird.

14. Netzwerkknoten (16, 18) nach Anspruch 13, worin die Verarbeitungsschaltlogik (42) konfiguriert ist, um zu bestimmen, dass die drahtlose Vorrichtung (20) zyklisches Shift-Hopping innerhalb von Wiederholungen des orthogonalen Deckungscodes deaktivieren soll, basierend darauf, dass sie konfiguriert ist zu identifizieren, dass die drahtlose Vorrichtung (20) auf überlappenden Uplink-Ressourcen mit einer oder mehreren anderen drahtlosen Vorrichtung (20), die mit dem drahtlosen Kommunikationsnetzwerk (10) verbunden sind, gemeinsam geplant ist oder werden wird.

15. Netzwerkknoten (16, 18) nach Anspruch 13 oder 14, worin die Verarbeitungsschaltlogik (42) konfiguriert ist, um zu bestimmen, dass die drahtlose Vorrichtung (20) zyklisches Shift-Hopping innerhalb von individuellen Wiederholungen des orthogonalen Deckungscodes deaktivieren soll, basierend darauf, dass sie konfiguriert ist zu bestimmen, dass das drahtlose Gerät (20) ein erster Benutzer von mehreren Benutzern mit mehreren Eingängen und mehreren Ausgängen, "MU-MIMO", in dem drahtlosen Kommunikationsnetzwerk (10) ist, der auf überlappenden Uplink-Ressourcen mit einem zweiten MU-MIMO-Benutzer in dem drahtlosen Kommunikationsnetzwerk (10) geplant ist oder werden wird..

**Revendications**

1. Procédé (400) de transmission de symboles de référence de démodulation à partir d'un dispositif sans fil (20), ledit procédé comprenant les étapes ci-dessous consistant à :

désactiver sélectivement (402) un saut de décalage cyclique au sein de répétitions d'un code de couverture orthogonal qui est appliqué à des transmissions de symboles de référence de démodulation par le dispositif sans fil (20), de sorte que le saut de décalage cyclique est désactivé sur la base d'un motif de saut de séquence de base pseudo-aléatoire modifié utilisé, dans lequel une même séquence de base est répétée sur toutes les fentes au sein d'une sous-trame sur laquelle s'applique le code de couverture orthogonal ; et

lorsqu'un saut de décalage cyclique au sein de répétitions du code de couverture orthogonal est désactivé, appliquer (406) une même valeur de décalage cyclique à des symboles de référence de démodulation individuels transmis au sein de chaque répétition du code de couverture orthogonal, de sorte que tous les symboles de référence de démodulation transmis pour une répétition du code de couverture orthogonal présentent la même valeur de décalage cyclique qui leur est appliquée ; et

lorsqu'un saut de décalage cyclique au sein de répétitions du code de couverture orthogonal est activé, appliquer (410) une valeur de décalage cyclique différente à des symboles de référence de démodulation individuels transmis au sein de chaque répétition du code de couverture orthogonal, de sorte que tous les symboles de référence de démodulation transmis pour une répétition du code de couverture orthogonal présentent des valeurs de décalage cyclique différentes qui leur sont appliquées.

2. Procédé (400) selon la revendication 1, comprenant en outre, lorsqu'un saut de décalage cyclique au sein de chaque répétition du code de couverture orthogonal est désactivé, l'étape consistant à modifier la valeur de décalage cyclique appliquée sur des répétitions successives du code de couverture orthogonal.

3. Procédé (400) selon la revendication 2, dans lequel l'étape de modification de la valeur de décalage cyclique appliquée sur des répétitions successives du code de couverture orthogonal consiste à modifier de manière pseudo-aléatoire la valeur de décalage cyclique sur des répétitions successives du code de couverture orthogonal.

4. Procédé (400) selon l'une quelconque des revendications précédentes, dans lequel des éléments respectifs du code de couverture orthogonal sont appliqués à des symboles respectifs des symboles de référence de démodulation individuels transmis dans chaque répétition du code de couverture orthogonal, et dans lequel le procédé inclut, à chaque répétition du code de couverture orthogonal, l'étape consistant à transmettre un même symbole de référence de démodulation, plusieurs fois, mais avec un élément différent du code de couverture orthogonal appliqué à chaque fois.

5. Procédé (400) selon la revendication 4, comprenant en outre l'étape consistant à modifier le symbole de référence de démodulation sur des répétitions successives du code de couverture orthogonal, de sorte que différents symboles de référence de démodulation sont répétés dans différentes répétitions du code de couverture orthogonal.

6. Dispositif sans fil (20) configuré en vue d'un fonctionnement dans un réseau de communication sans fil (10), et comprenant :

un montage de circuits radio (30) configuré de manière à transmettre des symboles de référence de démodulation à un ou plusieurs points de réception dans le réseau de communication sans fil (10) ; et
un montage de circuits de traitement (32) fonctionnellement associé au montage de circuits radio (30) et configuré de manière à :

désactiver sélectivement un saut de décalage cyclique au sein de répétitions d'un code de couverture orthogonal qui est appliqué à des transmissions de symboles de référence de démodulation par le dispositif sans fil (20) ;
déterminer qu'un saut de décalage cyclique doit être désactivé sur la base d'un motif de saut de séquence de base pseudo-aléatoire modifié utilisé, dans lequel une même séquence de base est répétée sur toutes les fentes au sein d'une sous-trame sur laquelle s'applique le code de couverture orthogonal ; et
lorsqu'un saut de décalage cyclique au sein de répétitions du code de couverture orthogonal est désactivé, appliquer une même valeur de décalage cyclique à des symboles de référence de démodulation individuels transmis au sein de chaque répétition du code de couverture orthogonal, de sorte que tous les symboles de référence de démodulation transmis pour une répétition du code de couverture orthogonal présentent la même valeur de décalage cyclique qui leur est appliquée ; et
lorsqu'un saut de décalage cyclique au sein de répétitions du code de couverture orthogonal est activé, appliquer une valeur de décalage cyclique différente à des symboles de référence de démodulation individuels transmis au sein de chaque répétition du code de couverture orthogonal, de sorte que tous les symboles de référence de démodulation transmis pour une répétition du code de couverture orthogonal présentent des valeurs de décalage cyclique différentes qui leur sont appliquées.

7. Dispositif sans fil (20) selon la revendication 6, dans lequel, lorsqu'un saut de décalage cyclique au sein de chaque répétition du code de couverture orthogonal est désactivé, le montage de circuits de traitement (32) est configuré de manière à modifier la valeur de décalage cyclique appliquée sur des répétitions successives du code de couverture orthogonal.

8. Dispositif sans fil (20) selon l'une quelconque des revendications 6 à 7, dans lequel des éléments respectifs du code de couverture orthogonal sont appliqués à des symboles respectifs des symboles de référence de démodulation individuels transmis dans chaque répétition du code de couverture orthogonal, et dans lequel le montage de circuits de traitement (32) est configuré de manière à, dans chaque répétition du code de couverture orthogonal, transmettre un même symbole de référence de démodulation, plusieurs fois, mais avec un élément différent du code de couverture orthogonal appliqué à chaque fois.

9. Procédé (700) de commande d'un dispositif sans fil (20) fonctionnant dans un réseau de communication sans fil (10), ledit procédé étant mis en oeuvre dans un noeud de réseau (16, 18), et comprenant les étapes ci-dessous consistant à :

déterminer (702) que le dispositif sans fil (20) devrait désactiver un saut de décalage cyclique au sein de répétitions d'un code de couverture orthogonal appliqué par le dispositif sans fil (20) à des transmissions de symboles de référence de démodulation, « DMRS », par le dispositif sans fil (20) ; et
signaler implicitement (704) au dispositif sans fil (20) qu'un saut de décalage cyclique doit être désactivé, en indiquant un motif de saut de séquence de base pseudo-aléatoire modifié, dans lequel une même séquence de base doit être répétée par le dispositif sans fil (20) sur toutes les fentes au sein d'une sous-trame sur laquelle s'applique le code de couverture orthogonal.

10. Procédé (700) selon la revendication 9, dans lequel ladite étape de détermination comprend l'étape consistant à identifier que le dispositif sans fil (20) est ou sera coplanifié sur des ressources de liaison montante en chevauchement avec un ou plusieurs autres dispositifs sans fil (20) connectés au réseau de communication sans fil (10).

11. Procédé (700) selon la revendication 9 ou 10, dans lequel ladite étape de détermination consiste à déterminer que le dispositif sans fil (20) est un premier utilisateur de type « entrée multiple, sortie multiple, multiutilisateur », « MU-MIMO », dans le réseau de communication sans fil (10) qui est ou sera coplanifié sur des ressources de liaison montante en chevauchement avec un second utilisateur MU-MIMO dans le réseau de communication sans fil (10).

12. Procédé (700) selon la revendication 11, dans lequel le premier utilisateur MU-MIMO est dans une première cellule (12, 14) du réseau de communication sans fil (10) et le second utilisateur MU-MIMO est dans une seconde cellule voisine (12, 14) du réseau de communication sans fil (10), et dans lequel ladite étape de détermination est basée sur l'évaluation d'informations de planification de liaison montante pour les première et seconde cellules (12, 14).

13. Noeud de réseau (16, 18) configuré en vue d'un fonctionnement dans un réseau de communication sans fil (10), et comprenant :

un montage de circuits radio (40) configuré de manière à transmettre des signaux à un dispositif sans fil (20) connecté au réseau de communication sans fil (10) à travers le noeud de réseau (16, 18), et à recevoir des signaux en provenance du dispositif sans fil (20) ;
un montage de circuits de traitement (42) fonctionnellement associé au montage de circuits radio (40), et configuré de manière à :

déterminer que le dispositif sans fil (20) devrait désactiver un saut de décalage cyclique au sein de répétitions d'un code de couverture orthogonal appliqué par le dispositif sans fil (20) à des transmissions de symboles de référence de démodulation, « DMRS », par le dispositif sans fil (20) ; et
signaler implicitement au dispositif sans fil (20) qu'un saut de décalage cyclique doit être désactivé, en indiquant un motif de saut de séquence de base pseudo-aléatoire modifié dans lequel une même séquence de base doit être répétée par le dispositif sans fil (20) sur toutes les fentes au sein d'une sous-trame sur laquelle s'applique le code de couverture orthogonal.

14. Noeud de réseau (16, 18) selon la revendication 13, dans lequel le montage de circuits de traitement (42) est configuré de manière à déterminer que le dispositif sans fil (20) devrait désactiver un saut de décalage cyclique au sein de répétitions du code de couverture orthogonal sur la base du fait qu'il est configuré de manière à identifier que le dispositif sans fil (20) est ou sera coplanifié sur des ressources de liaison montante en chevauchement avec un ou plusieurs autres dispositifs sans fil (20) connectés au réseau de communication sans fil (10).

15. Noeud de réseau (16, 18) selon la revendication 13 ou 14, dans lequel le montage de circuits de traitement (42) est configuré de manière à déterminer que le dispositif sans fil (20) devrait désactiver un saut de décalage cyclique au sein de répétitions individuelles du code de couverture orthogonal, sur la base du fait qu'il est configuré de manière à déterminer que le dispositif sans fil (20) est un premier utilisateur de type « entrée multiple, sortie multiple, multiutilisateur », « MU-MIMO », dans le réseau de communication sans fil (10) qui est ou sera coplanifié sur des ressources de liaison montante en chevauchement avec un second utilisateur MU-MIMO dans le réseau de communication sans fil (10).

*FIG. 1*

EP 2 777 233 B1

**FIG. 2**

**FIG. 3**

FIG. 4

*FIG. 5*

*FIG. 6*

**FIG. 7**

S1
subframe

UE1
DMRS
TRANSMISSIONS

| | | | DM RS1 $X_{11}$ | | | | | | DM RS2 $X_{12}$ | | | |

slot-1                          slot-2

time

**FIG. 8A**

S2
subframe

UE2
DMRS
TRANSMISSIONS

| | | | DM RS1 $X_{21}$ | | | | | | DM RS2 $X_{22}$ | | | |

slot-1                          slot-2

time

**FIG. 8B**

**EP 2 777 233 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61556550 B